# DEMANDE DE BREVET EUROPEEN

(11) **EP 4 414 347 A1**
(43) Date de publication de la demande: **14.08.2024**
(21) Numéro de dépôt: 23155642.4
(22) Date de dépôt: 08.02.2023
(51) Int. Cl.: C05G 3/30, C05C 1/00, C05C 5/00, C05C 9/00, B65D 81/26

(54) **PROCÉDÉ ET DISPOSITIF DE STOCKAGE D'UN PRODUIT CRISTALLIN SOUS FORME DE GRAINS OU DE PAILLETTES**

(71) Demandeur: Acand, 59133 Camphin en Carembault (FR)
(72) Inventeur: LEVRAUD, Colette, 59133 Camphin en Carembault (FR)
(74) Mandataire: RVDB

(57) **Abrégé**

La présente invention concerne un procédé de stockage d'un produit cristallin sous forme de grains ou de paillettes selon lequel, on enferme ledit produit dans un contenant déformable (1), étanche à l'eau et à la vapeur d'eau.

De manière caractéristique, selon l'invention, ledit produit présente des formes cristallines allotropiques en fonction de la température et/ou de la pression et/ou est hygroscopique et l'on introduit dans ledit contenant (1) au moins partiellement rempli dudit produit, une enveloppe fermée (3) au moins partiellement perméable à l'eau et/ou à la vapeur d'eau et contenant un dessiccant solide et l'on referme ledit contenant (1) éventuellement après avoir ajouté dudit produit sur ladite enveloppe (3).

La présente invention concerne également un dispositif associé.

## Description

### Domaine technique

La présente invention concerne un dispositif et procédé de stockage d'un produit sous forme de grains ou paillettes. Ce procédé permet de conserver la granulométrie et/ou la coulabilité dudit produit.

### Art antérieur

Certains produits sous forme de grains ou paillettes s'agglomèrent et forment des mottes lors de leur stockage. Les mottes sont, en outre, plus ou moins friables et donc plus ou moins faciles à casser. Leur utilisation est ainsi rendue très difficile car il faut, au préalable, briser les mottes pour assurer l'écoulement du produit. Plus le produit est hygroscopique, plus il a tendance à former des mottes du fait notamment de la formation de ponts liquides mobiles entre les grains.

Pour certains produits, on observe une modification de la granulométrie lors de changements de température et/ou de pression. C'est le cas des produits qui possèdent plusieurs formes cristallines allotropiques. La modification de la température/pression transforme le réseau cristallin du produit ; on observe alors la formation de ponts cristallins solides entre les grains, modifiant ainsi la granulométrie du produit et conduisant à la formation de mottes ou au contraire à la transformation des grains en poudre lors d'un passage d'une forme allotropique à l'autre.

Dans tous les cas, la modification de la granulométrie du produit gêne le bon dosage de ce dernier dans des installations calibrées pour une granulométrie donnée et donc une fluidité/coulabilité donnée du produit.

Les conditions de stockage sont également très variables en ce qui concerne la température et l'humidité, ce qui favorise le passage d'une forme allotropique à l'autre, l'agglomération des grains du fait de l'humidité et donc la formation de mottes. Ce type de produit est de plus souvent transporté par bateaux dans des sacs empilés les uns sur les autres, ce qui favorise le mottage du fait de la pression exercée sur le produit.

Dans le cas du nitrate d'ammonium qui est utilisé comme engrais et comme précurseur explosif, le document WO 2018/234553 A1 propose de mélanger les grains de nitrate d'ammonium avec des grains de dessiccant. Ces grains de dessiccant sont formés de particules d'un mélange de nitrate d'ammonium et de nitrate de magnésium. Ce procédé modifie la composition chimique du produit -puisqu'il fait appel à un ajout de nitrate de magnésium - ce qui peut être préjudiciable pour certaines utilisations du nitrate d'ammonium, notamment en réduisant son efficacité.

Le document WO2016128406 décrit un procédé de production de nitrate d'ammonium dans lequel on mélange les grains de nitrate d'ammonium avec des granules d'alumine activée. Là encore, la composition chimique du produit est modifiée et son usage est même impossible pour certaines applications nécessitant son broyage ou sa dissolution.

### Problème technique à résoudre

Un but de la présente invention est de proposer un procédé et un dispositif de stockage d'un produit sous forme de grains ou paillettes qui permettent de limiter les variations de sa granulométrie sans altérer sa composition.

Un autre but de la présente invention est de proposer un procédé et un dispositif de stockage d'un produit sous forme de grains ou paillettes qui permettent de conserver la coulabilité du produit.

Un autre but de la présente invention est de proposer un procédé et un dispositif de stockage d'un produit sous forme de grains ou paillettes qui limitent la formation de mottes et/ou permet d'obtenir des mottes friables, donc faciles à casser.

Un autre but de l'invention est de proposer un procédé et un dispositif de stockage d'un produit sous forme de grains ou paillettes qui permettent de séparer facilement le dessiccant du produit, voire de recycler ce dernier.

### Résumé de l'invention

La présente invention concerne un procédé de stockage d'un produit cristallin sous forme de grains ou de paillettes selon lequel, on enferme ledit produit dans un contenant déformable étanche à l'eau et à la vapeur d'eau.

De manière caractéristique, ledit produit présente des formes cristallines allotropiques en fonction de la température et/ou de la pression et/ou est hygroscopique, l'on dispose une enveloppe fermée, au moins partiellement perméable à l'eau et/ou à la vapeur d'eau et contenant un dessiccant solide, dans ledit contenant lequel est au moins partiellement rempli dudit produit et l'on referme ledit contenant éventuellement après avoir ajouté dudit produit sur ladite enveloppe.

Le contenant déformable peut être, par exemple, un sac du type « Big bag » ou GRVS (grand récipient pour vrac).

Les inventeurs ont découvert qu'une enveloppe de dessiccant permet de réduire l'effet de l'humidité du produit, à la surface des grains ou paillettes de produit enfermé dans le contenant et au coeur du volume de produit. Il s'ensuit qu'après stockage selon le procédé de l'invention, le produit forme moins de mottes et des mottes plus petites et plus friables. Ceci est dû d'une part à la réduction de la formation de ponts liquides et cristallins en surface des grains et d'autre part à la réduction de la fraction de produit qui passe d'une forme cristalline allotropique à l'autre(ce passage d'une forme allotropique cristalline fait grossir les grains puis les réduit en poussière). Cet effet est surprenant et inattendu car il n'était pas évident que la réduction de l'humidité de surface du produit conduise à un tel effet sur sa coulabilité ou sa capacité à motter, notamment à travers une action sur ses changements de phases cristallines allotropiques.

### Description détaillée

Avantageusement, le produit est hygroscopique et présente plusieurs formes cristallines allotropiques, notamment à pression atmosphérique et/ou à des températures comprises entre -21°C et 80°C.

Avantageusement et indépendamment du contenant, l'enveloppe est au moins perméable à la vapeur d'eau. De préférence, toute la surface de l'enveloppe est perméable à la vapeur d'eau.

La structure de l'enveloppe est telle qu'elle ne laisse pas le dessiccant sortir et contaminer le produit.

Selon le procédé de l'invention, on peut disposer ladite enveloppe entre la paroi interne dudit contenant fermé et ledit produit, sur la surface dudit produit ou dans le volume dudit produit. Avantageusement on dispose l'enveloppe sur la surface libre du volume de produit enfermé dans le contenant. Il est également possible de disposer l'enveloppe dans le volume de produit notamment verticalement dans le volume de produit ou latéralement au contenant entre la surface interne latérale du contenant déformable et le produit.

Sans que cela soit limitatif, le produit en grains ou paillettes peut être choisi parmi le nitrate d'ammonium, le nitrate de calcium, le nitrate de sodium, le nitrate de potassium, le chlorure de calcium, le chlorure de sodium, le chlorure de potassium, l'hydroxyde de sodium, l'hydroxyde de potassium, l'urée et leurs mélanges.

Le dessiccant peut être choisi parmi l'alumine activée, le nitrate d'ammonium, le nitrate de magnésium, le nitrate de potassium, le gel de silice, le perchlorate de magnésium, l'oxyde de magnésium, le carbonate de magnésium, le sulfate de calcium, le sulfate de cuivre, le chlorure de lithium, le bromure de lithium, le pentoxyde de phosphore, la bentonite, les zéolithes, l'acétate de calcium, le chlorure de potassium, l'hydroxyde de calcium et leurs mélanges. Dans le cas où le produit à stocker est du nitrate d'ammonium, on peut utiliser de l'alumine activée et/ou également des grains formés d'un mélange de nitrate d'ammonium et de nitrate de magnésium en tant que dessiccant.

Selon un exemple particulier de mise en oeuvre également applicable au dispositif de l'invention, le produit est du nitrate d'ammonium et le dessiccant est avantageusement de l'alumine activée ou du nitrate de magnésium ou un mélange des deux.

Avantageusement, après stockage, on retire ladite enveloppe dudit contenant et éventuellement on recycle ladite enveloppe de dessiccant ou ledit dessiccant. L'enveloppe peut être recyclée en étant réutilisée pour la mise en oeuvre du procédé de l'invention. Le dessiccant (s'il est saturé) peut être recyclé par chauffage, par exemple, à travers ladite enveloppe (par exemple) avant d'être à nouveau utilisé pour la mise en oeuvre du procédé de l'invention.

La présente invention concerne également un dispositif permettant la mise en oeuvre du procédé selon l'invention. Ce dispositif comprend un contenant déformable imperméable à l'eau et à la vapeur d'eau et une enveloppe au moins partiellement perméable à l'eau et/ou à la vapeur d'eau et qui contient un dessiccant solide ; ladite enveloppe a une structure (porosité) qui empêche ledit dessiccant de sortir de ladite enveloppe.

Le contenant déformable peut contenir un produit choisi parmi le nitrate d'ammonium, le nitrate de calcium, le nitrate de sodium, le nitrate de potassium, le chlorure de calcium, le chlorure de sodium, le chlorure de potassium, l'hydroxyde de sodium, l'hydroxyde de potassium, l'urée et leurs mélanges et ladite enveloppe peut contenir un dessiccant choisi parmi l'alumine activée, le nitrate d'ammonium, le nitrate de magnésium, le nitrate de potassium, le gel de silice, le perchlorate de magnésium, l'oxyde de magnésium, le carbonate de magnésium, le sulfate de calcium, le sulfate de cuivre, le chlorure de lithium, le bromure de lithium, le pentoxyde de phosphore, la bentonite, les zéolithes, l'acétate de calcium, le chlorure de potassium, l'hydroxyde de calcium et leur mélanges.

S'agissant du nitrate d'ammonium, ce dernier est de préférence du nitrate d'ammonium technique à faible densité ou LDAN lequel se différencie du nitrate d'ammonium utilisé pour les engrais qui est moins poreux.

Avantageusement, le contenant contient du nitrate d'ammonium et l'enveloppe de l'alumine activée.

Le contenant déformable peut être un sac dont l'ouverture peut être fermée par pliage et/ou étranglement.

Sans que cela ne soit limitatif, ledit produit est avantageusement sous forme de grains. Les grains peuvent former des interstices de taille et de forme aptes à laisser migrer la vapeur d'eau vers le dessiccant.

Avantageusement, le produit est sous forme de grains et présente un pourcentage massique supérieur à 80% et notamment supérieur à 89% de grains ayant une dimension maximale égale ou inférieure à 2,00 mm et une dimension minimale supérieure ou égale à 0,5 mm et notamment supérieure ou égale à 0,425 mm Ce peut être le cas du nitrate d'ammonium technique, notamment, lequel se présente sous forme de grains pouvant avoir une dimension minimale égale à 0,425 mm,. Le dispositif de l'invention permet de conserver cette granulométrie durant et après le stockage du produit. Cette granulométrie permet également à l'humidité contenue dans le produit de se déplacer facilement dans le produit, dans les interstices entre les grains (probablement en phase vapeur) afin d'être piégée par le dessiccant.

Le produit peut également être sous forme de paillettes. Dans ce cas, le produit présente également un pourcentage massique supérieur à 80% et notamment supérieur à 89% de paillettes ayant une longueur maximale égale ou inférieure à 5,00 mm et une longueur minimale supérieure ou égale à 0,8 mm..

Selon un mode de réalisation particulier, l'enveloppe comporte au moins une portion formée d'une feuille microperforée ou est au moins partiellement en matériau non tissé ou textile. L'enveloppe peut être, par exemple, constituée d'une feuille de polyéthylène microperforé perméable à la vapeur d'eau. L'enveloppe peut également être constituée d'un matériau non tissé en fibres naturelles ou synthétiques, comme du polypropylène. L'enveloppe peut comprendre une poignée intégrée ce qui facilite sa manipulation et/ou sa mise place. L'enveloppe présente de préférence une forme plate afin d'être facilement disposée dans ou sur le produit et de maximiser la surface de sa paroi perméable à la vapeur d'eau en contact avec le produit ce qui permet de maximiser la surface de transfert d'eau et/ou de vapeur d'eau entre le dessiccant et le produit.

Avantageusement, l'enveloppe est en matériau qui supporte des températures supérieures à 100°C sans subir de dégradation mécanique et/ou chimique. Une telle température permet de régénérer le dessiccant sans le sortir de l'enveloppe. L'eau vapeur peut ainsi s'échapper de l'enveloppe laquelle peut être réutilisée.

Avantageusement, selon un mode de réalisation combinable avec chacun des modes de réalisation précités, le dispositif peut comporter des moyens de liaison entre ladite enveloppe et ledit contenant ; lesdits moyens de liaison relient ladite enveloppe audit contenant lorsque ladite enveloppe est disposée dans ledit contenant et que ledit contenant contient ledit produit et est fermé. L'enveloppe reste ainsi liée au contenant lors de la vidange de ce dernier par le fond ; elle peut être ainsi facilement récupérée pour être réutilisée ou régénérée.

Ces moyens de liaisons peuvent être, par exemple, un lien attaché de manière amovible à l'enveloppe (par sa poignée, par exemple) et fixé à une de ses extrémités sur le contenant ou coincé dans la partie resserrée du sac qui assure sa fermeture. Ceci peut être mis en oeuvre par l'utilisation d'un crochet sur la ligne d'ensachage ; le lien de l'enveloppe est maintenu sur le crochet lors de la fermeture du sac, laquelle est mise en oeuvre par resserrement de la paroi du sac sur elle-même au niveau de l'ouverture du sac.

Ladite enveloppe peut comporter une ouverture formant poignée.

Avantageusement, quel que soit le mode de réalisation, ladite enveloppe est disposée sur la surface libre dudit produit enfermé dans ledit contenant.

Le contenant n'est pas limité selon l'invention. Il peut comprendre une sache interne de polyéthylène et une sache externe contenant ou constituée de fibres de polypropylène et en particulier de fibres de polypropylène tissées.

Quel que soit le mode de mise en oeuvre du procédé de l'invention ou le mode de réalisation du dispositif de l'invention, le rapport massique masse de dessiccant/masse de produit est de préférence égal ou supérieur à 0,1 et de préférence égal ou inférieur à 0,7. De préférence, le rapport massique masse de dessiccant/masse de produit est égal ou supérieur à 0,3 et de préférence égal ou inférieur à 0,5. De manière encore plus préférée, le rapport massique masse de dessiccant/masse de produit est égal ou supérieur à 0,2 et de préférence égal ou inférieur à 0,4. Ce rapport est en particulier avantageux dans le cas du nitrate d'ammonium traité avec de l'alumine activée.

Quel que soit le mode de mise en oeuvre du procédé de l'invention ou le mode de réalisation du dispositif de l'invention, le dessiccant présente une granulométrie telle que 80 % massique du dessiccant présente une taille minimale de grain égale ou supérieure à 1 mm et une taille maximale de grain égale ou inférieure à 8 mm (mesurée par tamisage). En particulier, la taille minimale peut être de 1 mm et la taille maximale de 3 mm.

Quel que soit le mode de mise en oeuvre du procédé de l'invention ou le mode de réalisation du dispositif de l'invention, le produit présente lors de son introduction dans ledit contenant déformable, une humidité égale ou supérieure à 0,02 % et de préférence égale ou inférieure à 0,1. Cette humidité sera conservée ou diminuée pendant le stockage dans le dispositif de l'invention.

Quel que soit le mode de mise en oeuvre du procédé de l'invention ou le mode de réalisation du dispositif de l'invention, le produit à stocker peut ne pas être poreux ou de préférence présenter une porosité égale ou supérieure à 8% et égale ou inférieure à 15% (cette porosité correspond à un nitrate d'ammonium industriel LDAN). Une telle gamme de porosité permet un relargage de l'eau contenue dans les pores par évaporation.

Quel que soit le mode de mise en oeuvre du procédé de l'invention ou le mode de réalisation du dispositif de l'invention, l'enveloppe présente une surface en contact avec ledit produit égale ou supérieure à 0,12 m² et de préférence égale ou supérieure à 0,15 m², 0,18 m² ou 0,3 m² ( en particulier pour une enveloppe déposée sur la surface du produit). La surface de contact peut être inférieure à 0,5 m².

Si l'enveloppe est disposée dans le produit, la surface de contact est doublée ; l'enveloppe présente ainsi une surface de contact avec ledit produit égale ou supérieure à 0,24 m². La surface de contact peut être égale ou supérieure à 0,30 m², 0,36 m² ou 0,6 m². La surface de contact peut être inférieure à 1 m².

De préférence, toute l'enveloppe est perméable à la vapeur d'eau.

Avantageusement, le stockage du produit est mis en oeuvre sans contrôle de la température externe au contenant et sans contrôle de la pression exercée sur le contenant ; plusieurs contenants peuvent ainsi être empilés les uns sur les autres lors du stockage.

### Définitions

Au sens de la présente invention, un « contenant déformable » est un contenant qui peut être ouvert et fermé et dont la forme peut être modifiée en fonction de la quantité de produit qu'il contient et/ou de la pression à laquelle il est soumis. Typiquement, il peut s'agir d'un sac et même d'un big-bag (« Flexible Intermediate Bulk Container » ou Grand Récipient Vrac Souple) Le terme « grain » signifie au sens de la présente invention, une particule sensiblement sphérique ou ovale ayant une dimension minimale supérieure à 100 µm et notamment une particule ayant une dimension minimale supérieure ou égale à 0,4 mm et une dimension maximale inférieure ou égale à 7 mm.

Le terme « paillette » signifie au sens de la présente invention, une particule allongée et plate de dimension minimale (longueur) supérieure à 100µm et notamment supérieure ou égale à 0,4mm et inférieure ou égale à 10 mm.

Le terme « enveloppe » désigne un sachet fermé.

Le terme « dessiccant solide» désigne un produit sous forme solide, de préférence sous forme de grains, capable d'adsorber, d'absorber ou de réagir chimiquement avec l'eau (liquide et/ou vapeur) afin de la capturer, éventuellement de manière réversible.

Le terme « coulabilité » désigne la capacité du produit en grains ou en paillettes à s'écouler librement de manière régulière et constante sous forme de particules individuelles. Cette capacité dépend des conditions externes et de l'humidité du produit. Une coulabilité satisfaisante correspond à un produit en grains ou en paillettes qui se déplace sous l'effet de la gravité sans action extérieure. Une action extérieure additionnelle peut être une vibration ou une agitation, par exemple.

### Brève description des figures

Les caractéristiques et avantages de l'invention apparaîtront à la lecture de la description suivante de deux exemples de réalisation du dispositif de l'invention, présentés à titre d'exemples illustratifs et non limitatifs et qui fait référence aux figures annexées parmi lesquelles :
- la Fig. 1 représente une vue schématique d'un premier mode de réalisation du dispositif de l'invention ;
- la Fig. 2 représente une vue schématique d'un second mode de réalisation du dispositif de l'invention ;
- La Fig. 3 représente un mode de réalisation particulier de l'enveloppe de dessiccant ; et
- la Fig. 4a représente une photographie de l'état du produit après 2 mois de stockage dans un sac souple sans présence de dessiccant et la Fig. 4b représente l'état du produit après 2 mois de stockage dans le dispositif de l'invention dans les mêmes conditions de température, pression et humidité que pour le produit représenté sur la Fig. 4a.

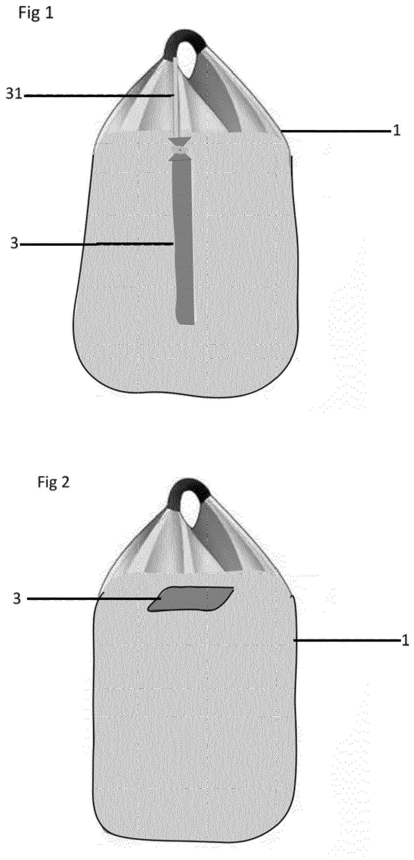

En référence à la Fig. 1, un premier mode de réalisation va maintenant être décrit. Selon ce mode de réalisation, le dispositif de l'invention comporte un sac déformable, donc souple 1, rempli du produit à stocker. Le sac 1 est formé d'une sache interne en polyéthylène étanche à l'air et à l'eau et d'une sache externe en polypropylène tissé. Le dispositif comporte également une enveloppe 3 remplie de dessiccant. L'enveloppe 3 est munie d'un lien 31 qui la relie au sac 1. L'extrémité du lien 31 peut être attachée à une anse de portage du sac 1 ou être fixée (collée) à l'intérieur du sac 1 ou retenue par frottements (coincée) dans la portion resserrée/pliée du sac qui ferme ce dernier. Sur la Fig. 1, l'enveloppe 3 est disposée verticalement sensiblement au milieu du sac 1. Elle se trouve donc au coeur de la masse formée par le produit stocké dans le sac 1. La longueur de l'enveloppe représente avantageusement la hauteur de la masse de produit stocké, c'est-à-dire environ 2/3 de la hauteur du sac 1. L'enveloppe 3 est perméable à la vapeur d'eau et présente une structure qui retient le dessiccant en son sein.

En référence à la Fig. 2, selon un deuxième mode de réalisation, dont les éléments en commun avec le premier sont référencés à l'identique, l'enveloppe 3 est posée sur la surface libre du produit contenu dans le sac 1, en regard de la portion du sac qui fait office d'ouverture et qui peut être refermée, par exemple par pliage ou resserrement.

Dans les deux modes de réalisation, le sac 1 est fermé au-dessus de l'enveloppe 3 de manière à éviter l'entrée d'air et d'eau (liquide et vapeur) dans le sac 1.

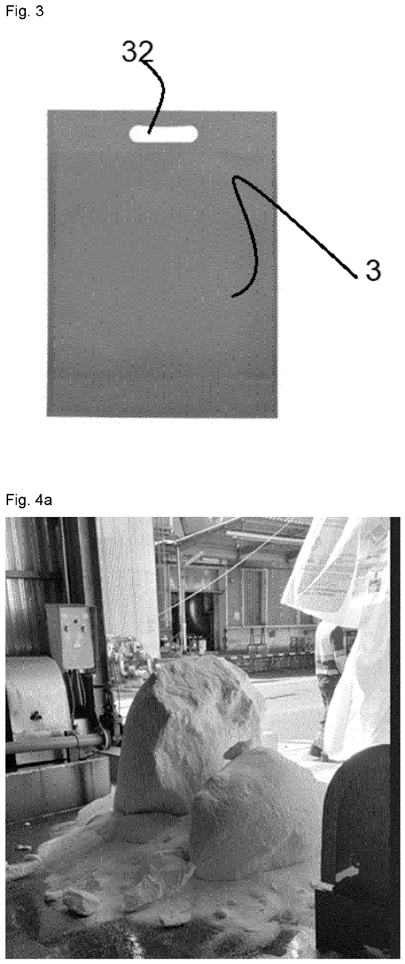

En référence à la Fig. 3, selon un mode de réalisation particulier, l'enveloppe 3 présente une poignée 32. L'enveloppe 3 définit une poche fermée contenant le dessiccant. La poignée 32 vient prolonger la poche fermée sans donner accès à cette dernière. L'enveloppe 3 présente une épaisseur réduite (elle est plate) de manière à maximiser la surface de contact entre la face de l'enveloppe 3 posée sur le produit et le produit lui-même.

### Exemple de mise en oeuvre du procédé de l'invention

Des sacs d'un même lot de nitrate d'ammonium technique ont été stockés pendant l'été 2022 (période estivale). D'autres sacs d'un même lot ont été stockés pendant la période de février à avril 2022 (période froide). Un lot comprend 6 à 8 sacs contenant chacun 1000 Kg de nitrate d'ammonium technique avec une granulométrie comprise à 89 % entre 0,425 et 2 mm. Certains paramètres, dont la granulométrie, ont été mesurés à l'ensachage puis lors de l'ouverture de certains lots 1 mois plus tard et lors de l'ouverture d'autres lots deux mois après l'ensachage. Un échantillon a été prélevé sur le dessus du volume de nitrate d'ammonium (au-dessus), l'autre à l'intérieur du volume (intérieur). Les mottes ont été cassées préalablement à la mesure de la granulométrie d'un échantillon. Chaque sac (sauf le sac témoin) contient chacun une enveloppe perméable à la vapeur d'eau et renfermant une masse différente d'alumine activée. Cette enveloppe est disposée au-dessus du volume de nitrate d'ammonium. Des lots témoins qui ne comportent pas d'enveloppe de dessiccant ont également été confectionnés et testés.

Dans cet exemple, le dessiccant est sous forme de grains d'alumine activée dont 80% en masse présentent une dimension minimale (taille minimale) égale à 1mm et une dimension maximale (taille maximale) égale à 3mm.

Le nitrate d'ammonium présente deux formes cristallines allotropiques ; la forme α qui existe de -18°C à 32,1°C à pression atmosphérique et la forme β qui existe entre 32,1°C et 84,2°C à pression atmosphérique. Les sacs des lots à tester ont tous été stockés sous un sac de type « Big Bag »de 1t pour simuler des conditions de stockage et transport standard. L'ensachage a eu lieu le 13 juillet 2022 pour la période estivale. La température n'est pas descendue en dessous de 27°C du fait d'un été chaud même les nuits.

La friabilité a été mesurée pour déterminer la résistance aux chocs et à l'abrasion du nitrate d'ammonium en pesant la quantité de particules brisées produites par passage d'un échantillon dans un cyclone alimenté par un débit d'air contrôlé. On obtient des résultats similaires en mettant le nitrate dans un appareil tournant fermé avec des billes métalliques (fraction < 0,5 mm pour le nitrate d'ammonium technique).

La granulométrie a été mesurée à l'aide de tamis empilés avec des mailles variables (typiquement supérieur à 4, 2,5, 2, 1, 0,5 et 0,2 mm) puis repartie selon une courbe de Gauss. Pour la granulométrie, les intervalles s'entendent bornes incluses.

La densité apparente a été mesurée selon un mode opératoire basé sur la norme NF EN 1236 qui décrit une méthode pour déterminer la masse volumique apparente (sans tassement) des engrais solides, ou des nitrates d'ammonium techniques (remplace le terme "densité vrac") en mesurant la masse de l'unité de volume du produit après qu'elle se soit déversée librement dans un récipient.

La teneur en nitrate a été mesurée selon la méthode Kjeldahl et est exprimé en nitrate d'ammonium NH₄NO₃ ou en Azote total N (28/80 de la teneur en nitrate d'ammonium).

La porosité a été mesurée par absorption fuel : immersion du nitrate d'ammonium dans du fuel, puis égouttage et essorage par centrifugation ou tirage au vide pour mesurer sa capacité de rétention de fuel exprimée en % masse.

L'humidité a été mesurée selon la méthode de Karl Fisher.

Les résultats obtenus pour divers paramètres sont reproduits dans les tableaux qui suivent. A la date d'ensachage pour la période estivale, les caractéristiques du produit sont reproduites dans les tableaux 1 et 2.

Pour un même échantillon, plusieurs sacs de nitrate d'ammonium ont été testés avec des masses différentes d'alumine activée comme dessiccant contenu dans l'enveloppe.

**Tableau 1**

| Teneur N t(%) | Teneur nitrate (%) | Densité apparente (Kg/l) | Porosité (%) |
|---|---|---|---|
| 34,895 | 99,7 | 0,706 | 12,5 |

**Tableau 2**

| Humidité (%) | > 2,38 mm (%) | 2,38 mm à 2 mm (%) | de 2 à 0,425 mm (%) | < 0,425 mm (%) | Friabilité |
|---|---|---|---|---|---|
| 0,05 | 0,7 | 6,1 | 93,2 | 0 | 0,67 |

Les tableaux 3 et 4 regroupent les valeurs des paramètres après 1 mois de stockage en période estivale tandis que les tableaux 5 et 6 regroupent les valeurs des paramètres après deux mois de stockage en période estivale.

**Tableau 3**

| échantillon | Masse de dessiccant/ position enveloppe | teneur N t (%) | teneur nitrate (%) | Densité Apparente (Kg/l) | Porosité (%) |
|---|---|---|---|---|---|
| 1 | 0 KG--dessus | 34,91 | 98,95 | 0,716 | 12,59 |
| | 0 KG--intérieur | 34,9 | 98,37 | 0,722 | 12,43 |
| 2 | 3 KG--dessus | 34,91 | 98,67 | 0,714 | 12,57 |
| | 3 KG--intérieur | 34,91 | 98,75 | 0,714 | 12,79 |
| 3 | 5 KG--dessus | 34,9 | 98,77 | 0,722 | 12,22 |
| | 5 KG--intérieur | 34,9 | 98,84 | 0,718 | 12,18 |

**Tableau 4**

| échantillon | Masse de dessiccant/ position enveloppe | Humidité (%) | > 2,38 mm (%) | 2,38 mm à 2 mm (%) | de 2 à 0,425 mm (%) | < 0,425 mm (%) | Friabilité |
|---|---|---|---|---|---|---|---|
| 1 | 0 KG--intérieur | 0,02297 | 1,38 | 8,47 | 90,15 | 0,00 | 1,74 |
| 2 | 3 KG--dessus | 0,01772 | 1,08 | 8,19 | 90,73 | 0,00 | 1,15 |
| | 3 KG--intérieur | 0,01833 | 1,00 | 7,64 | 91,36 | 0,00 | 1,91 |
| 3 | 5 KG--dessus | 0,02195 | 0,98 | 7,43 | 91,59 | 0,00 | 1,18 |
| | 5 KG--intérieur | 0,02172 | 0,91 | 6,73 | 92,36 | 0,00 | 1,27 |

**Tableau 5**

| échantillon | Masse de dessiccant/ position enveloppe | teneur N t (%) | teneur nitrate (%) | Densité Apparente (Kg/l) | Porosité (%) |
|---|---|---|---|---|---|
| 4 | 0 KG--dessus | 34,901965 | 99,7199 | 0,73 | 12,61 |
| 5 | 3 KG--dessus | 34,902434 | 99,72124 | 0,724 | 13,3 |
| | 3 KG--intérieur | 34,9045725 | 99,72735 | 0,723 | 12,74 |
| 6 | 5 KG--dessus | 34,8912585 | 99,68931 | 0,721 | 13,01 |
| | 5 KG--intérieur | 34,887965 | 99,6799 | 0,725 | 12,83 |

**Tableau 6**

| échantillon | Masse de dessiccant/ position enveloppe | Humidité (%) | > 2,38 mm (%) | 2,38 mm à 2 mm (%) | de 2 à 0,425 mm (%) | < 0,425 mm (%) | Friabilité |
|---|---|---|---|---|---|---|---|
| 4 | 0 KG--dessus | 0,0301 | 2,1 | 8,7 | 89,20 | 0,00 | 1,1 |
| 5 | 3 KG--dessus | 0,02876 | 0,8 | 6,8 | 92,40 | 0,00 | 1,11 |
| | 3 KG--intérieur | 0,02265 | 1,00 | 7,2 | 91,80 | 0,00 | 1,42 |

Les mêmes tests ont été réalisés en saison froide (ensachage en février 2022 et ouverture à un mois et deux mois).

Les résultats sont regroupés dans les tableaux ci-dessous. Les tableaux 7 et 8 regroupent les valeurs à l'ensachage.

**Tableau 7**

| Teneur N t(%) | Teneur nitrate (%) | Densité apparente (Kg/l) | Porosité (%) |
|---|---|---|---|
| 34,5 | 98,5 | 0,742 | 11,34 |

**Tableau 8**

| Humidité (%) | > 2,38 mm (%) | 2,38 mm à 2 mm (%) | de 2 à 0,425 mm (%) | < 0,425 mm (%) | Friabilité |
|---|---|---|---|---|---|
| 0,06 | 2,3 | 10 | 87,7 | 0 | 0,75 |

Les tableaux 9 et 10 regroupent les valeurs des paramètres après 1 mois de stockage tandis que les tableaux 11 et 12 regroupent les valeurs des paramètres après deux mois de stockage. La teneur en azote et la teneur en nitrate ne sont pas toujours remesurées car elles ne varient pas durant le stockage.

**Tableau 9**

| échantillon | Masse de dessiccant/ position enveloppe | Densité Apparente (Kg/l) | Porosité (%) |
|---|---|---|---|
| 6 | 0 KG--dessus | 0,732 | 11,62 |
| | 0 KG--intérieur | 0,731 | 11,41 |
| 7 | 2 KG--dessus | 0,726 | 11,48 |
| | 2 KG--intérieur | 0,734 | 11,78 |
| 8 | 3 KG--dessus | 0,726 | 11,5 |
| | 3 KG--intérieur | 0,729 | 11,89 |
| 9 | 5 KG--dessus | 0,732 | 12,21 |
| | 5 KG--intérieur | 0,734 | 12,21 |

**Tableau 10**

| échantillon | Masse de dessiccant/ position enveloppe | Humidité (%) | > 2,38 mm (%) | 2,38 mm à 2 mm (%) | de 2 à 0,425 mm (%) | < 0,425 mm (%) | Friabilité |
|---|---|---|---|---|---|---|---|
| 6 | 0 KG--dessus | 0,03324 | 1,46 | 8,2 | 90,34 | 0 | 0,77 |
| | 0 KG--intérieur | 0,04224 | 1,08 | 7,1 | 91,82 | 0 | 0,85 |
| 7 | 2 KG--dessus | 0,03050 | 2,3 | 14,3 | 83,4 | 0 | 0,96 |
| | 2 KG--intérieur | 0,031 33 | 1,18 | 7 | 91,82 | 0 | 1,02 |
| 8 | 3 KG--dessus | 0,03566 | 0,7 | 8,9 | 90,4 | 0 | 0,99 |
| | 3 KG--intérieur | 0,03538 | 1,71 | 7,8 | 90,49 | 0 | 0,89 |
| 9 | 5 KG--dessus | 0,03683 | 1,4 | 9,7 | 88,9 | 0 | 0,96 |
| | 5 KG--intérieur | 0,03493 | 1,03 | 6,5 | 92,47 | 0 | 0,95 |

**Tableau 11**

| échantillon | Masse de dessiccant/ position enveloppe | Densité Apparente (Kg/l) | Porosité (%) |
|---|---|---|---|
| 10 | 0 KG--dessus | 0,724 | 11,32 |
| | 0 KG--intérieur | 0,723 | 11,53 |
| 11 | 2 KG--dessus | 0,723 | 11,88 |
| | 2 KG--intérieur | 0,726 | 11,84 |
| 12 | 3 KG--dessus | 0,728 | 11,96 |
| | 3 KG--intérieur | 0,73 | 11,87 |
| 13 | 5 KG--dessus | 0,732 | 12,03 |
| | 5 KG--intérieur | 0,733 | 12,02 |

**Tableau 12**

| échantillon | Masse de dessiccant/ position enveloppe | Humidité (%) | > 2,38 mm (%) | 2,38 mm à 2 mm (%) | de 2 à 0,425 mm (%) | < 0,425 mm (%) | Friabilité/pH |
|---|---|---|---|---|---|---|---|
| 10 | 0 KG--dessus | 0,02050 | 1,4 | 8,1 | 90,5 | 0 | 0,64/5,1 |
| | 0 KG--intérieur | 0,02220 | 1,3 | 8,9 | 89,8 | 0 | 0,81/5,2 |
| 11 | 2 KG--dessus | 0,02052 | 1,2 | 9,9 | 88,7 | 0 | 0,67/5,1 |
| 12 | 3 KG--dessus | 0,02688 | 0,9 | 7,4 | 91,4 | 0 | 0, 57/4, 9 |
| | 3 KG--intérieur | 0,02053 | 0,9 | 8,9 | 89,9 | 0 | 0, 67/4, 9 |
| 13 | 5 KG--dessus | 0,02164 | 0,9 | 6,8 | 92,3 | 0 | 0,68/5 |
| | 5 KG--intérieur | 0,01521 | 1 | 8,4 | 90,6 | 0 | 0,82/5 |

Au vu des résultats précités, on confirme que la présence du dessiccant dans l'enveloppe n'a pas d'influence sur la teneur en nitrate et en azote du produit. Le dessiccant étant enfermé dans l'enveloppe, il ne s'échappe pas hors de celle-ci et ne se mélange pas au nitrate d'ammonium.

On constate que la présence de l'enveloppe de dessiccant améliore la friabilité des mottes. La friabilité augmentée s'explique notamment par la réduction du nombre de ponts cristallins formés entre les grains suite à une moindre recristallisation en surface des grains

On constate également que le dispositif de l'invention permet de retenir l'humidité du nitrate d'ammonium en surface et à coeur du volume ensaché ce qui n'était pas évident avec une enveloppe de dessiccant posée sur le dessus du volume de nitrate d'ammonium. On constate également que le pourcentage des grains ayant une taille de 2 à 0,425mm reste plus proche de la valeur à l'ensachage lorsque le nitrate d'ammonium est conservé dans le dispositif de l'invention.

Enfin, s'agissant de la transformation de la cristallinité, on constate que la densité apparente du produit augmente très peu dans le cas du stockage dans le dispositif de l'invention, au bout de 2 mois de stockage en période estivale. On en déduit que la proportion de forme β, laquelle est plus dense, est moindre dans le cas d'un stockage du nitrate d'ammonium dans le dispositif de l'invention que dans un sac déformable seul. Grâce au dispositif de l'invention, la forme α du nitrate d'ammonium, laquelle est moins dense que la forme β qui se forme au-delà de 32,1°C reste prépondérante et ce de manière stable dans le temps. Cette transformation est notable durant la saison chaude où la température redescend la nuit. Or, dans le cas du stockage dans le dispositif de l'invention, on n'observe pas la formation de poudre (laquelle serait due aux passages répétés d'une forme à l'autre (cyclage)), ni d'augmentation notable de la taille des grains.

Ainsi, de manière surprenante et avantageuse, le dessiccant dans l'enveloppe agit à la fois sur l'humidité et donc la formation de ponts liquides et cristallins (formés par recristallisation entre deux grains recouverts d'une pellicule d'eau) et sur le changement de forme allotropique par réduction des cycles thermiques.

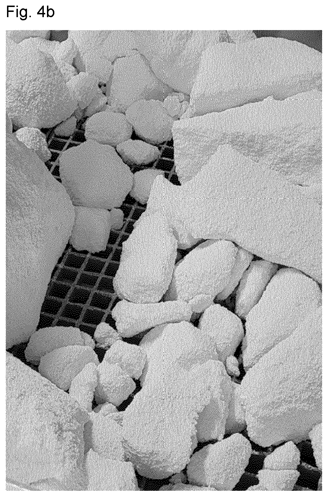

Par ailleurs, les Fig. 4a et 4b montrent bien que sans l'enveloppe de dessiccant (alumine activée), il y a formation d'énormes mottes difficiles à casser (voir Fig. 4a). En présence de l'enveloppe d'alumine, les mottes sont plus petites et plus faciles à casser (friabilité plus grande). De plus, comme visible dans le Tableau 13 ci-dessous, le volume total des mottes (après deux mois de stockage) est plus faible dans le cas du stockage dans le dispositif de l'invention comparé au stockage dans un sac sans enveloppe de dessiccant.

**Tableau 13**

| Echantillon | Volume motté (%) |
|---|---|
| Avec enveloppe de dessiccant | 20%-30% |
| Sans enveloppe de dessiccant | 60%-70% |

## Revendications

1. Procédé de stockage d'un produit cristallin sous forme de grains ou de paillettes selon lequel, on enferme ledit produit dans un contenant déformable (1), étanche à l'eau et à la vapeur d'eau, **caractérisé en ce que** ledit produit présente des formes cristallines allotropiques en fonction de la température et/ou de la pression et/ou est hygroscopique et **en ce que** l'on dispose une enveloppe fermée (3) au moins partiellement perméable à l'eau et/ou à la vapeur d'eau et contenant un dessiccant solide, dans ledit contenant (1) lequel est au moins partiellement rempli dudit produit et **en ce que** l'on referme ledit contenant (1) éventuellement après avoir ajouté dudit produit sur ladite enveloppe (3).

2. Procédé selon la revendication 1 **caractérisé en ce que** l'on dispose ladite enveloppe (3) sur la surface libre du volume dudit produit enfermé dans ledit contenant.

3. Procédé selon la revendication 1 ou 2, **caractérisé en ce que** ledit produit est choisi parmi le nitrate d'ammonium, le nitrate de calcium, le nitrate de sodium, le nitrate de potassium, le chlorure de calcium, le chlorure de sodium, le chlorure de potassium, l'hydroxyde de sodium, l'hydroxyde de potassium, l'urée et leurs mélanges.

4. Procédé selon l'une quelconque des revendications précédentes **caractérisé en ce que** ledit dessiccant est choisi parmi l'alumine activée, le nitrate d'ammonium, le nitrate de magnésium, le nitrate de potassium, le gel de silice, le perchlorate de magnésium, l'oxyde de magnésium, le carbonate de magnésium, le sulfate de calcium, le sulfate de cuivre, le chlorure de lithium, le bromure de lithium, le pentoxyde de phosphore, la bentonite, les zéolithes, l'acétate de calcium, le chlorure de potassium, l'hydroxyde de calcium et leurs mélanges.

5. Procédé selon l'une quelconque des revendications précédentes, **caractérisé en ce qu'**après stockage, on retire ladite enveloppe (3) dudit contenant (1) et **en ce qu'**éventuellement on recycle ladite enveloppe de dessiccant (3) ou ledit dessiccant.

6. Dispositif permettant la mise en oeuvre du procédé selon l'une quelconque des revendications 1 à 5, **caractérisé en ce qu'**il comprend un contenant déformable (1), imperméable à l'eau et à la vapeur d'eau et une enveloppe (3) au moins partiellement perméable à la vapeur d'eau et qui contient un dessiccant solide et **en ce que** ladite enveloppe (3) a une structure qui empêche ledit dessiccant de sortir de ladite enveloppe (3).

7. Dispositif selon la revendication 6, **caractérisé en ce que** ledit contenant contient un produit choisi parmi le nitrate d'ammonium, le nitrate de calcium, le nitrate de sodium, le nitrate de potassium, le chlorure de calcium, le chlorure de sodium, le chlorure de potassium, l'hydroxyde de sodium, l'hydroxyde de potassium, l'urée et leurs mélanges.

8. Dispositif selon l'une quelconque des revendications 6 à 7, **caractérisé en ce que** ladite enveloppe contient un dessiccant choisi parmi l'alumine activée, le nitrate d'ammonium, le nitrate de magnésium, le nitrate de potassium, le gel de silice, le perchlorate de magnésium, l'oxyde de magnésium, le carbonate de magnésium, le sulfate de calcium, le sulfate de cuivre, le chlorure de lithium, le bromure de lithium, le pentoxyde de phosphore, la bentonite, les zéolithes, l'acétate de calcium, le chlorure de potassium, l'hydroxyde de calcium et leur mélanges.

9. Dispositif selon l'une quelconque des revendications 6 à 8, **caractérisé en ce que** ledit produit présente un pourcentage massique supérieur à 80% et notamment supérieur à 89% de grains/paillettes ayant une dimension maximale égale ou inférieure à 2,00 mm et une dimension minimale supérieure ou égale à 0,5 mm ou 0,425 mm.

10. Dispositif selon l'une quelconque des revendications 6 à 9, **caractérisé en ce que** ladite enveloppe (3) comporte au moins portion formée d'une feuille microperforée ou est au moins partiellement en matériau non tissé ou textile.

11. Dispositif selon l'une quelconque des revendications 6 à 10, **caractérisé en ce qu'**il comporte des moyens de liaison (31) entre ladite enveloppe (3) et ledit contenant (1) et **en ce que** lesdits moyens de liaison (31) relient ladite enveloppe (3) audit contenant (1), lorsque ladite enveloppe (3) est disposée dans ledit contenant (1) et que ledit contenant (1) contient ledit produit et est fermé.

12. Dispositif selon l'une quelconque des revendications 6 à 11, **caractérisé en ce que** ladite enveloppe (3) est disposée sur la surface libre dudit produit enfermé dans ledit contenant (1).

13. Dispositif selon l'une quelconque des revendications 6 à 12, **caractérisé en ce que** ledit contenant déformable (1) comprend une sache interne de polyéthylène étanche à l'eau et à l'air et une sache externe contenant ou constituée de fibres de polypropylène et en particulier de fibres de polypropylène tissées.

14. Dispositif selon l'une quelconque des revendications 6 à 13, **caractérisé en ce que** ladite enveloppe comporte une ouverture formant poignée (32).
